(19) Europäisches Patentamt
European Patent Office
Office européen des brevets

(11) **EP 4 776 522 A1**

(12) **EUROPEAN PATENT APPLICATION**
published in accordance with Art. 153(4) EPC

(43) Date of publication:
**15.07.2026 Bulletin 2026/29**

(51) International Patent Classification (IPC):
**H04B 7/0413** (2017.01)

(21) Application number: **24870521.2**

(22) Date of filing: **18.09.2024**

(52) Cooperative Patent Classification (CPC):
**H04B 7/0413; H04B 7/0426; H04B 17/382;
H04W 72/044; H04W 72/542**

(86) International application number:
**PCT/CN2024/119384**

(87) International publication number:
**WO 2025/066977 (03.04.2025 Gazette 2025/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **27.09.2023 CN 202311289449**

(71) Applicant: **HUAWEI TECHNOLOGIES CO., LTD.
Shenzhen 518129 (CN)**

(72) Inventors:
• **ZHANG, Yan
Shenzhen, Guangdong 518129 (CN)**
• **BAI, Xiaofei
Shenzhen, Guangdong 518129 (CN)**
• **HU, Mengshi
Shenzhen, Guangdong 518129 (CN)**
• **NI, Yizhan
Shenzhen, Guangdong 518129 (CN)**
• **GAN, Ming
Shenzhen, Guangdong 518129 (CN)**

(74) Representative: **Gill Jennings & Every LLP
The Broadgate Tower
20 Primrose Street
London EC2A 2ES (GB)**

(54) **BEAM ALIGNMENT TRAINING METHOD AND APPARATUS**

(57) This application provides a beam alignment training method and apparatus. The method includes: A transmit end sends M pieces of first beam measurement data, where the M pieces of first beam measurement data correspond to M measurement beams; the transmit end receives a combination coefficient set, where the combination coefficient set is determined by a receive end based on the M pieces of first beam measurement data, the combination coefficient set includes M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and the transmit end determines a combined beam based on the combination coefficient set and the M measurement beams. In this way, the combined beam can better match an actual air interface channel direction, and a channel gain can be better used, thereby implementing precise beam alignment and improving coverage performance.

FIG. 5

## Description

This application claims priority to Chinese Patent Application No. 202311289449.X, filed with China National Intellectual Property Administration on September 27, 2023, and entitled "BEAM ALIGNMENT TRAINING METHOD AND APPARATUS", which is incorporated herein by reference in its entirety.

## TECHNICAL FIELD

This application relates to the field of communications, and more specifically, to a beam alignment training method and apparatus.

## BACKGROUND

Currently, the Institute of Electrical and Electronics Engineers (Institute of Electrical and Electronics Engineers, IEEE) 802.11ad/ay is one of the standards for applying wireless local area network (wireless local area network, WLAN) communication to a millimeter-wave frequency band. Hybrid analog-digital beamforming (hybrid analog-digital beamforming, HAD-BF) is a technology used to overcome signal attenuation in a millimeter-wave frequency band. HAD-BF is a process of selecting an optimal beam through a beam alignment training process.

However, beams sent by a transmit end (initiator) of the HAD-BF technology are codebook beams that are in fixed different directions and that are pre-stored in the transmit end. Because division of angle space by the codebook beam is predetermined, when main lobes of codebook beams sent by the receive end (responder) and a transmit end that perform analog beam alignment training cannot be completely aligned, the receive end cannot obtain a maximum beam gain. Similarly, when a millimeter-wave signal has a reflection path, a single beam cannot cover all channel angles. In this case, the receive end cannot obtain all channel gains.

Therefore, how to improve beam alignment training performance is an urgent problem to be resolved.

## SUMMARY

This application provides a beam alignment training method and apparatus, to better match an actual air interface channel direction and better use a channel gain, so as to implement precise beam alignment and improve coverage performance.

According to a first aspect, a beam alignment training method is provided. The method includes: A transmit end sends M pieces of first beam measurement data, where the M pieces of first beam measurement data correspond to M measurement beams; the transmit end receives a combination coefficient set, where the combination coefficient set is determined by a receive end based on the M pieces of first beam measurement data, the combination coefficient set includes M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and the transmit end determines a combined beam based on the combination coefficient set and the M measurement beams.

In the foregoing technical solution, the transmit end obtains beam weighting coefficients corresponding to a plurality of measurement beams, and combines the beam weighting coefficients and the original measurement beams into a new combined beam. The combined beam can better match an actual air interface channel direction, and a channel gain can be better used, so that precise beam alignment can be implemented, and coverage performance can be improved. For example, in a scenario in which that of the receive end is not completely aligned with a main lobe of the measurement beam, a channel gain can be better used through the combined beam obtained through the combination coefficient set, to implement precise beam alignment. For another example, in a scenario in which an NLOS exists in a millimeter-wave channel, when a single beam cannot cover all channel angles, channel gains of all beams are comprehensively considered for the combined beam obtained through the combination coefficient set, to implement precise beam alignment and improve coverage performance.

With reference to the first aspect, in some implementations of the first aspect, before that the transmit end sends the M pieces of first beam measurement data, the method further includes: The transmit end sends N pieces of second beam measurement data, where the N pieces of second beam measurement data correspond to N measurement beams; and the transmit end receives N second signal-to-noise ratios, where an $n^{th}$ second signal-to-noise ratio corresponds to an $n^{th}$ measurement beam; and determines, as the M measurement beams, measurement beams corresponding to second signal-to-noise ratios that are in the N second signal-to-noise ratios and that are greater than a preset threshold, where $1 \leq n \leq N$, n and N are positive integers, and M<N.

In the foregoing technical solution, the measurement beams obtained through one round of beam alignment training are used for a next round of beam alignment training, so that beam overheads and a calculation amount of the receive end can be reduced, and a signal-to-noise ratio fluctuation of measurement beams in a next round of in-package beam alignment training can be limited, so that the combination coefficient set obtained through calculation is more accurate.

With reference to the first aspect, in some implementations of the first aspect, the method further includes: The transmit end receives M first signal-to-noise ratios and an estimated combination signal-to-noise ratio, where the M first signal-to-noise ratios are obtained by the receive end based on the M pieces of first beam measurement data, and the estimated combination signal-to-noise ratio is determined by the receive end based on the M pieces of first beam measurement data and the combination coefficient set; and the transmit end determines, based on the M first signal-to-noise ratios and the estimated combination signal-to-noise ratio, to use the combined beam to perform data transmission, or determines to use a measurement beam corresponding to a largest first signal-to-noise ratio in the M first signal-to-noise ratios to perform data transmission.

In the foregoing technical solution, the transmit end comprehensively considers the M first signal-to-noise ratios and the estimated combination signal-to-noise ratio, and selects a more proper beam for subsequent data transmission, so that precise beam alignment can be implemented, and coverage performance can be improved.

With reference to the first aspect, in some implementations of the first aspect, the M pieces of first beam measurement data are carried in one null data packet NDP, or the M pieces of first beam measurement data are carried in one or M protocol data unit PPDU data packets, where
when the M pieces of first beam measurement data are carried in one NDP or one PPDU data packet, the M pieces of first beam measurement data may be M training fields.

In the foregoing technical solution, when the M pieces of first beam measurement data are carried in one NDP, a channel measurement compression feedback manner of a current mainline Wi-Fi protocol may still be used, and a high frequency and low frequency convergence scenario may be compatible.

According to a second aspect, a beam alignment training method is provided, including: A receive end receives M pieces of first beam measurement data, where the M pieces of first beam measurement data correspond to M measurement beams; the receive end determines a combination coefficient set based on the M pieces of first beam measurement data, where the combination coefficient set includes M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and the receive end sends the combination coefficient set.

It should be understood that beneficial effects corresponding to the solution of the second aspect are similar to those of the first aspect. For detailed descriptions, refer to the first aspect. Details are not described herein again.

With reference to the second aspect, in some implementations of the second aspect, that the receive end determines the combination coefficient set based on the M pieces of first beam measurement data includes: The receive end determines M first channel estimation results based on the M pieces of first beam measurement data; the receive end determines a full-band channel covariance matrix corresponding to the M first channel estimation results, where the full-band channel covariance matrix is obtained by performing summation averaging on K $M \times M$-dimensional channel covariance matrices corresponding to K subcarriers, and K is a positive integer; and the receive end performs singular value decomposition on the full-band channel covariance matrix to obtain the combination coefficient set.

In the foregoing technical solution, for beam alignment training of a millimeter-wave high frequency, the combination coefficient set is obtained by performing singular value decomposition on the full-band channel covariance matrix. This not only has low complexity, but also may still use a channel measurement compression feedback manner of a current mainline Wi-Fi protocol, and has good compatibility.

With reference to the second aspect, in some implementations of the second aspect, before receiving the M pieces of first beam measurement data, the method further includes: The receive end receives N pieces of second beam measurement data, where the N pieces of second beam measurement data correspond to N measurement beams, $1 \leq n \leq N$, and n and N are positive integers; the receive end determines N second signal-to-noise ratios based on the N pieces of second beam measurement data, where an $n^{th}$ second signal-to-noise ratio corresponds to an $n^{th}$ measurement beam; and the receive end sends the N second signal-to-noise ratios.

With reference to the second aspect, in some implementations of the second aspect, the method further includes: The receive end determines an estimation result of combination based on the combination coefficient set and the M first channel estimation results; the receive end determines an estimated combination signal-to-noise ratio based on the estimation result of combination; the receive end determines M first signal-to-noise ratios based on the M first channel estimation results; and the receive end sends the M first signal-to-noise ratios and the estimated combination signal-to-noise ratio.

With reference to the second aspect, in some implementations of the second aspect, the M pieces of first beam measurement data are carried in one null data packet NDP, or the M pieces of first beam measurement data are carried in one or M protocol data unit PPDU data packets.

According to a third aspect, a beam alignment training apparatus is provided, including a transceiver unit and a processing unit. The transceiver unit is configured to send M pieces of first beam measurement data, where the M pieces of first beam measurement data correspond to M measurement beams; the transceiver unit is configured to receive a combination coefficient set, where the combination coefficient set is determined by a receive end based on the M pieces of first beam measurement data, the combination coefficient set includes M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and the processing unit is configured to determine a combined beam based on the combination coefficient set and the M measurement beams.

It should be understood that beneficial effects corresponding to the solution of the third aspect are similar to those in the first aspect. Details are not described herein again.

With reference to the third aspect, in some implementations of the third aspect, before the transceiver unit is configured to send the M pieces of first beam measurement data, the transceiver unit is further configured to: send N pieces of second beam measurement data, where the N pieces of second beam measurement data correspond to N measurement beams; and receive N second signal-to-noise ratios, where an $n^{th}$ second signal-to-noise ratio corresponds to an $n^{th}$ measurement beam; and the processing unit is further configured to determine, as the M measurement beams, measurement beams corresponding to second signal-to-noise ratios that are in the N second signal-to-noise ratios and that are greater than a preset threshold, where $1 \leq n \leq N$, n and N are positive integers, and M<N.

With reference to the third aspect, in some implementations of the third aspect, the transceiver unit is further configured to: receive M first signal-to-noise ratios and an estimated combination signal-to-noise ratio, where the M first signal-to-noise ratios are obtained by the receive end based on the M pieces of first beam measurement data, and the estimated combination signal-to-noise ratio is determined by the receive end based on the M pieces of first beam measurement data and the combination coefficient set; and the processing unit is further configured to: determine, based on the M first signal-to-noise ratios and the estimated combination signal-to-noise ratio, to use the combined beam to perform data transmission, or determine to use a measurement beam corresponding to a largest first signal-to-noise ratio in the M first signal-to-noise ratios to perform data transmission.

With reference to the third aspect, in some implementations of the third aspect, the M pieces of first beam measurement data are carried in one null data packet NDP, or the M pieces of first beam measurement data are carried in one or M protocol data unit PPDU data packets.

According to a fourth aspect, a beam alignment training apparatus is provided, including a transceiver unit and a processing unit. The transceiver unit is configured to receive M pieces of first beam measurement data, where the M pieces of first beam measurement data correspond to M measurement beams; the processing unit is configured to determine a combination coefficient set based on the M pieces of first beam measurement data, where the combination coefficient set includes M beam weighting coefficients, an $m^{th}$ beam weighting coefficient corresponds to an $m^{th}$ piece of first beam measurement data, the $m^{th}$ beam weighting coefficient represents a weight value of the $m^{th}$ measurement beam in the M measurement beams, $1 \leq m \leq M$, and m and M are positive integers; and the transceiver unit is configured to send the combination coefficient set.

It should be understood that beneficial effects corresponding to the solution of the fourth aspect are similar to those in the second aspect. Details are not described herein again.

With reference to the fourth aspect, in some implementations of the fourth aspect, the processing unit is specifically configured to determine M first channel estimation results based on the M pieces of first beam measurement data; determine a full-band channel covariance matrix corresponding to the M first channel estimation results, where the full-band channel covariance matrix is obtained by performing summation averaging on K $M \times M$-dimensional channel covariance matrices corresponding to K subcarriers, and K is a positive integer; and perform singular value decomposition on the full-band channel covariance matrix to obtain the combination coefficient set.

With reference to the fourth aspect, in some implementations of the fourth aspect, before the transceiver unit is configured to receive the M pieces of first beam measurement data, the transceiver unit is further configured to: receive N pieces of second beam measurement data, where the N pieces of second beam measurement data correspond to N measurement beams, $1 \leq n \leq N$, and n and N are positive integers; the processing unit is further configured to determine N second signal-to-noise ratios based on the N pieces of second beam measurement data, where an $n^{th}$ second signal-to-noise ratio corresponds to an $n^{th}$ measurement beam; and the transceiver unit is further configured to send the N second signal-to-noise ratios.

With reference to the fourth aspect, in some implementations of the fourth aspect, the processing unit is further configured to: determine an estimation result of combination based on the combination coefficient set and the M first channel estimation results; determine an estimated combination signal-to-noise ratio based on the estimation result of combination; and determine M first signal-to-noise ratios based on the M first channel estimation results; and the transceiver unit is further configured to send the M first signal-to-noise ratios and the estimated combination signal-to-noise ratio.

With reference to the fourth aspect, in some implementations of the fourth aspect, the M pieces of first beam measurement data are carried in one null data packet NDP, or the M pieces of first beam measurement data are carried in one or M protocol data unit PPDU data packets.

According to a fifth aspect, a beam alignment training apparatus is provided. The apparatus includes: a memory, configured to store a program; and a processor, configured to execute a computer program or instructions stored in the memory. When the computer program or the instructions stored in the memory is/are executed, the processor is configured to perform the method provided in any implementation of the first aspect or the second aspect.

In an implementation, the apparatus is a transmit end or a receive end in beam alignment training.

In another implementation, the apparatus is a chip, a chip system, or a circuit in a transmit end or a receive end in beam alignment training.

According to a sixth aspect, this application provides a processor, configured to perform the method according to any one of the implementations of the first aspect and the second aspect. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the foregoing information, the processor outputs the foregoing information to an interface, and transmits the information through the interface. After the foregoing information is output by the processor, other processing may further need to be performed on the information before the information arrives at the interface. Similarly, when the processor receives the foregoing input information, the interface obtains/receives the foregoing information, and inputs the foregoing information into the processor. Further, after the interface receives the foregoing information, other processing may need to be performed on the foregoing information before the foregoing information is input into the processor.

Unless otherwise specified, or if operations such as related transmitting, sending and obtaining/receiving do not conflict with actual functions or internal logic in related descriptions, the operations may be understood as operations such as outputting, receiving, and inputting, or may be understood as transmitting, sending and receiving operations performed by a radio frequency circuit and an antenna. This is not limited in this application.

In an implementation process, the processor may be a processor specially configured to perform these methods, or a processor, for example, a general-purpose processor, that executes a computer program or instructions in the memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in embodiments of this application.

According to a seventh aspect, a computer-readable storage medium is provided. The computer-readable storage medium stores program code to be executed by a device, and the program code includes the method provided in any one of the implementations of the first aspect and the second aspect.

According to an eighth aspect, a computer program product including instructions is provided. When the computer program product runs on a computer, the computer is enabled to perform the method provided in any one of the implementations of the first aspect and the second aspect.

According to a ninth aspect, a chip is provided. The chip includes a processor and a communication interface. The processor reads, through the communication interface, instructions stored in a memory, to perform the method provided in any one of the implementations of the first aspect and the second aspect.

Optionally, in an implementation, the chip further includes the memory. The memory stores a computer program or instructions. The processor is configured to execute the computer program or the instructions stored in the memory. When the computer program or the instructions is/are executed, the processor is configured to perform the method provided in any one of the implementations of the first aspect and the second aspect.

## BRIEF DESCRIPTION OF DRAWINGS

FIG. 1 is a diagram of a wireless communication application scenario according to an embodiment of this application;

FIG. 2 is a diagram of a structure of analog and digital hybrid beamforming according to an embodiment of this application;

FIG. 3A and FIG. 3B are diagrams of a beam alignment training method according to an embodiment of this application;

FIG. 4 is a diagram of a beam alignment training scenario according to an embodiment of this application;

FIG. 5 is a flowchart of interaction of a beam alignment training method according to an embodiment of this application;

FIG. 6 is a diagram of interaction of another beam alignment training method according to an embodiment of this application;

FIG. 7A and FIG. 7B are diagrams of interaction of still another beam alignment training method according to an embodiment of this application;

FIG. 8 is a diagram of interaction of yet another beam alignment training method according to an embodiment of this application;

FIG. 9 is a diagram of a beam alignment training apparatus 900 according to an embodiment of this application;

FIG. 10 is a diagram of a structure of a beam alignment training apparatus 1000 according to an embodiment of this application; and

FIG. 11 is a diagram of a chip system 1100 according to an embodiment of this application.

## DESCRIPTION OF EMBODIMENTS

The following describes technical solutions of this application with reference to accompanying drawings.

For ease of understanding embodiments of this application, the following points are described.

First, in this application, unless otherwise stated or there is a logic conflict, terms and/or descriptions in different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between the associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c. Each of a, b, and c may be in a singular form or a plural form.

Third, in this application, "first", "second", and various numerical numbers (for example, #1 and #2) are merely used for distinguishing for ease of description, but are not intended to limit the scope of embodiments of this application, for example, distinguishing different pieces of beam measurement data or the like, rather than describing a particular order or sequence. It should be understood that objects described in such a way are interchangeable in an appropriate circumstance, so that a solution other than embodiments of this application can be described.

It should be noted that, in the following, meanings represented by the information #1, the resource indication information #1, and the resource request information #1 are different from each other. It should be understood that names of information are merely examples for description. This is not limited in this application, and should not constitute any limitation on the technical solutions of this application.

Fourth, in this application, descriptions such as "when...", "in a case of...", and "if" all mean that corresponding processing is performed in a specific objective situation, and are not intended to limit time. The descriptions do not mean that a determining action is required during implementation, and do not mean any other limitation. In addition, it does not mean that a determining action after these condition conjunctions is the only condition for implementing the result, and other additional conditions may be included to implement the result.

Fifth, in this application, the terms "include", "have", and any variants thereof are intended to cover non-exclusive inclusion. For example, a process, method, system, product, or device including a series of steps or units is not necessarily limited to those clearly listed steps or units, but may include other steps or units that are not clearly listed or are inherent to the process, method, product, or device.

Sixth, in this application, "indicate" may include "directly indicate" and "indirectly indicate". When a piece of indication information indicates A, the indication information may directly indicate A or indirectly indicate A, but this does not mean that the indication information necessarily carries A.

Indication manners in embodiments of this application should be understood as covering various methods that can enable a to-be-indicated party to learn of to-be-indicated information. The to-be-indicated information may be sent as a whole, or may be divided into a plurality of pieces of sub-information for separate sending. In addition, sending periodicities and/or sending occasions of the sub-information may be the same or may be different. A specific sending method is not limited in this application.

The "indication information" in embodiments of this application may be an explicit indication, to be specific, direct indication is performed by using signaling, or obtaining is implemented based on a parameter indicated by signaling in combination with another rule or another parameter or through deduction; or may be an implicit indication, to be specific, obtaining is implemented based on a rule, a relationship, or another parameter or through deduction. This is not specifically limited in this application.

Seventh, in this application, "store" may refer to being stored in one or more memories. The one or more memories may be separately disposed, or may be integrated into an encoder or a decoder, a processor, or a communication apparatus. Alternatively, a part of the one or more memories may be separately disposed, and a part of the one or more memories are integrated into the translator, the processor, or the communication apparatus. A type of the memory may be a storage medium in any form. This is not limited in this application.

The technical solutions provided in embodiments of this application are applicable to a wireless local area network WLAN scenario. For example, the technical solutions support IEEE 802.11-related standards, for example, 802.11be, 802.11ad, 802.11ay, or 802.11bf, or Wi-Fi 8. Alternatively, the technical solutions may be applied to an ultra-wideband (ultra-wideband, UWB)-based wireless personal area network system, for example, 802.15 series standards, or may be applied to a sensing (sensing) system, for example, 802. 11bf series standards, or may be applied to millimeter wave (millimeter wave, mmWave), for example, 802.11ad series standards, or may be applied to wireless fidelity artificial intelligence (wireless fidelity artificial intelligence, Wi-Fi AI). The 802.11be standard is referred to as an extremely high throughput (extremely high throughput, EHT) standard. 802.1 1bf includes two major categories of standards: a low frequency (Sub-7 GHz) and a high frequency (60 GHz). Sub-7 GHz is implemented mainly based on standards such as 802.11 ax, 802.11be, and a next-generation standard. 60 GHz is implemented mainly based on standards such as 802.11ad, 802.11ay, and a next-generation standard. 802.11ad may also be referred to as a directional multi-gigabit (directional multi-gigabit, DMG) standard, and 802.11ay may also be referred to as an enhanced directional multi-gigabit (enhanced directional multi-gigabit, EDMG) standard.

Although embodiments of this application are mainly described by using an example in which a WLAN network is deployed, especially a network to which the IEEE 802.11 system standards are applied, a person skilled in the art easily understands that various aspects in embodiments of this application may be extended to other networks that use various standards or protocols, for example, a high performance radio local area network (high performance radio local area network, HIPERLAN), a wireless wide area network (wireless wide area network, WWAN), a wireless personal area network (wireless personal area network, WPAN), or other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a WLAN communication system, a Wi-Fi system, a fifth generation (5th generation, 5G) system or new radio (new radio, NR), a future sixth generation (6th generation, 6G) system, an internet of things (internet of things, IoT) network, or a vehicle-to-everything (vehicle to x, V2X).

The foregoing communication systems to which this application is applicable are merely examples for description, and the communication systems to which this application is applicable are not limited thereto. Unified descriptions are provided herein, and are not described below again.

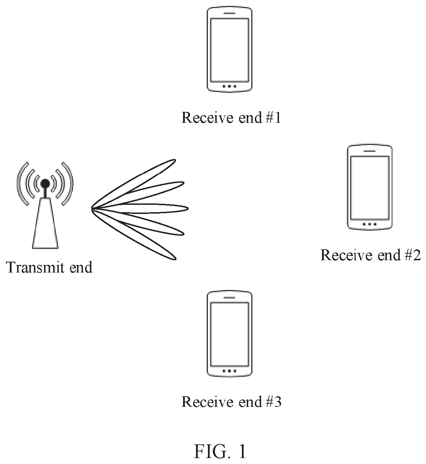

FIG. 1 is a diagram of a wireless communication application scenario according to an embodiment of this application. A millimeter-wave communication scenario shown in FIG. 1 may support communication between one transmit end and at least one receive end. For example, the transmit end communicates with a receive end #1, a receive end #2, and a receive end #3. A quantity of receive ends is not limited in this embodiment of this application. Embodiments of this application are not only applicable to communication between a transmit end and at least one receive end, but also applicable to mutual communication between a receive end and at least one transmit end. For ease of description, this application is described only by using an example in which a transmit end communicates with at least one receive end. However, the description manner does not limit an actual application scope of the technical solutions of this application. This is described herein once for all, and details are not described below again.

The transmit end in this application may be a device configured to communicate with the receive end. The network device may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB or eNodeB) in an LTE system, or may be a radio controller in a cloud radio access network (cloud radio access network, CRAN) scenario. Alternatively, the network device may be a relay station, an access point, a vehicle-mounted device, a wearable device, a network device in a 5G network, a network device in a future 6G network, a network device in a PLMN network, or the like. This is not limited in embodiments of this application.

The transmit end may be an access point (access point, AP) for the receive end (for example, a mobile phone) to access a wired (or wireless) network, and is mainly deployed at home, inside a building, and inside a campus. A typical coverage radius is tens of meters to hundreds of meters. Certainly, the transmit end may alternatively be deployed outdoors. The transmit end acts as a bridge that connects a wired network and a wireless network, primarily serving to connect various wireless network clients together and then connect the wireless network to the Ethernet. Specifically, the transmit end may be a terminal device (like a mobile phone) or a network device (like a router) with a Wi-Fi chip. The transmit end may be a device that supports the 802.11be standard. Alternatively, the access point may be a device supporting a plurality of WLAN standards of the 802.11 family such as 802.11ax, 802.11ac, 802.11n, 802.11g, 802.11b, 802.11a, 802.11ad, 802.11ay, 802.11aj, 802.11bf, and a next generation of 802.11be. The transmit end in this application may be a device that supports mmWave communication, or may be a transmit end applicable to a future-generation Wi-Fi standard.

The receive end in this application may be user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future 6G network, a terminal device in a public land mobile network (public land mobile network, PLMN), or the like. This is not limited in embodiments of this application.

The receive end may be a wireless communication chip, a wireless sensor, a wireless communication terminal, or the like, and may also be referred to as a user. For example, the receive end may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support WLAN standards of the 802.11 family such as 802.11ax, 802.11ac, 802.11n, 802.11g, 802.11b, 802.11a, 802.11ad, 802.11ay, 802.11aj, 802.11bf, and a next generation of 802.11be.

For example, the transmit end and the receive end may be devices applied to an internet of vehicles, internet of things nodes and sensors in an IoT, smart cameras, smart remote controls, and smart water meters and electricity meters in a smart home, or sensors in a smart city.

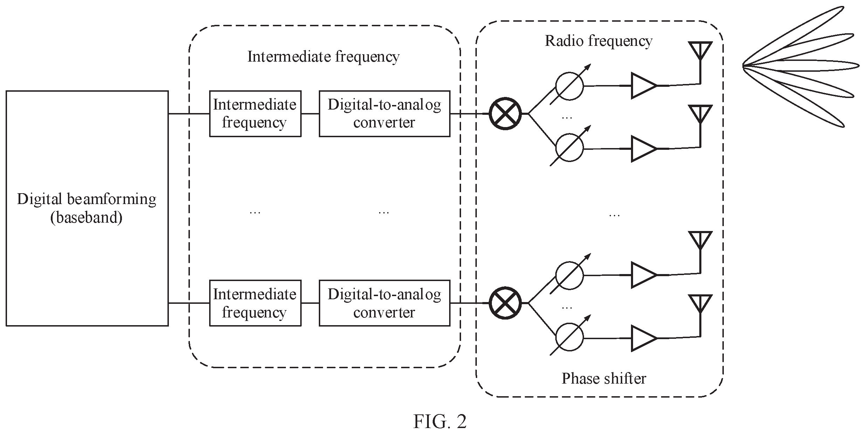

As described above, to overcome signal attenuation in a millimeter-wave frequency band, an analog beam of analog-digital hybrid beamforming is generally used in the millimeter-wave frequency band. FIG. 2 is a diagram of a structure of analog-digital hybrid beamforming according to an embodiment of this application. As shown in FIG. 2, digital beamforming is a baseband signal. Frequency conversion and digital-to-analog conversion are respectively implemented between the baseband signal and a radio frequency signal by using an intermediate frequency unit and a digital-to-analog converter. Each digital domain channel corresponds to one phase shifter network, and each phase shifter network may generate a different analog beam. In this embodiment of this application, the analog beam may also be referred to as a measurement beam, a codebook beam, or a beam. A name of the beam is not limited in this embodiment of this application.

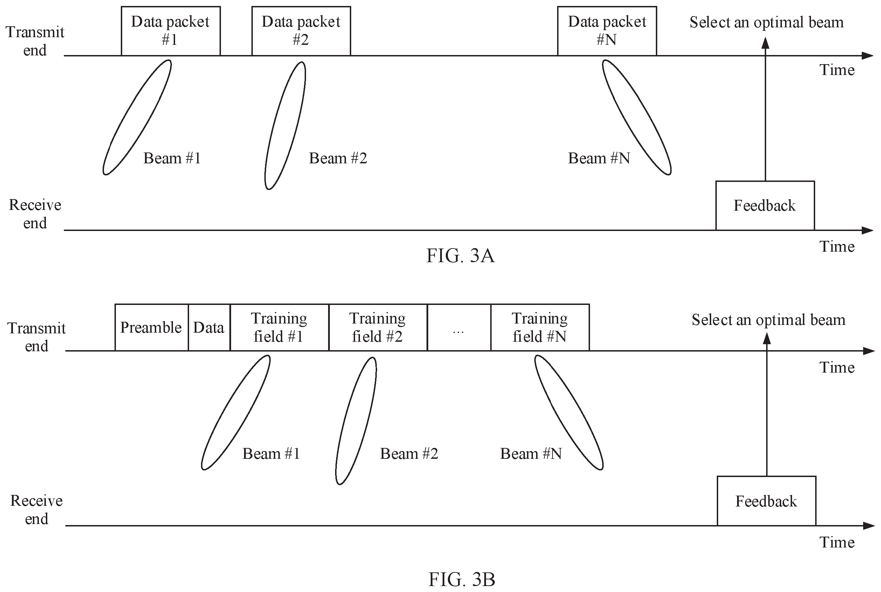

FIG. 3A and FIG. 3B are diagrams of a beam alignment training method according to an embodiment of this application.

The IEEE 802.11.ad/ay standard is applied to communication in a millimeter-wave frequency band. FIG. 3A and FIG. 3B show two beam alignment training methods. FIG. 3A shows a packet-by-packet (packet by packet) beam alignment training method, and FIG. 3B shows an in-packet (in-packet) beam alignment training method.

As shown in FIG. 3A, in time domain, in a first step, a transmit end may continuously send a plurality of data packets, where each data packet is a complete protocol data unit (presentation protocol data unit, PPDU), and includes a preamble and data. Each data packet may be sent through a different beam, and directions of the different beams are determined based on pre-stored beam direction angles. As shown in FIG. 3A and FIG. 3B, a data packet #1 is sent to a receive end through a beam #1, a data packet #2 is sent to the receive end through a beam #2, and so on. A data packet #N is sent to the receive end through a beam #N. A type of each data packet may be a sector sweep data packet (sector sweep packet, SSW packet) or a short sector sweep data packet (short sector sweep packet, short-SSW packet). Step 2: The receive end measures a signal-to-noise ratio (signal-to-noise ratio, SNR) of each data packet. Step 3: The receive end feeds back the measured SNR and a corresponding beam identifier to the transmit end. Step 4: The transmit end selects an optimal transmit beam based on content fed back by the receive end.

To reduce overheads corresponding to a beam, a training (training, TRN) field is added to the PPDU. As shown in FIG. 3B, a general procedure of the in-packet beam alignment training method is similar to that of the packet-by-packet beam alignment training method. A difference lies in that in the in-packet beam alignment training method, only one PPDU data packet is sent in a first step, a plurality of training fields are added to the PPDU, and each training field is sent through a different beam.

In the foregoing two beam alignment training methods, the optimal beam is selected based on the corresponding beam identifier and the signal-to-noise ratio that is fed back by the receive end and that is obtained through measurement. Measured beams are all codebook beams in predetermined directions of the transmit end, and a quantity of predefined codebook beams is limited. Therefore, in some scenarios, a channel direction cannot be completely matched, and the receive end cannot obtain a maximum beam gain. Consequently, the transmit end cannot obtain an optimal beam based on a measurement result.

In one scenario, a main lobe of a codebook beam of the transmit end is not completely aligned with that of the receive end, for example, a location relationship between the transmit end and the receive end #1 shown in FIG. 1. In this scenario, angular space is divided through the codebook beam predefined by the transmit end. A location of the transmit end is fixed, but a location of the receive end is random. The main lobe of the codebook beam of the transmit end is not completely aligned with that of the receive end, and the receive end cannot obtain a maximum beam gain. In this case, the transmit end cannot obtain the optimal beam based on a feedback result.

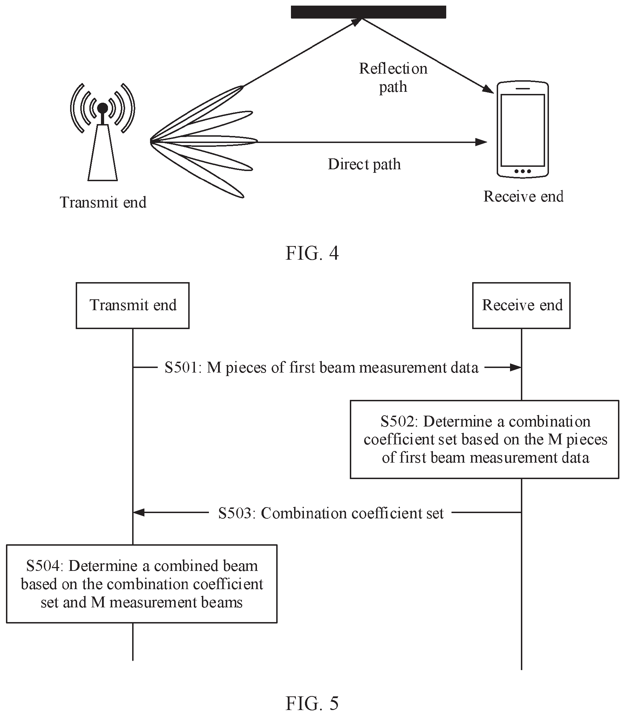

In another scenario, there is a non-line-of-sight (non-line-of-sight, NLOS) scenario on a millimeter-wave channel. FIG. 4 is a diagram of a beam alignment training scenario according to an embodiment of this application. As shown in FIG. 4, after being reflected by an obstacle, a beam #1 arrives at a receive end. A single beam cannot cover all channel angle directions. As a result, the receive end cannot obtain all channel gains, and the receive end cannot obtain the optimal beam based on a feedback result.

To resolve the foregoing problem, embodiments of this application provide a beam alignment training method and apparatus. The following provides detailed descriptions with reference to FIG. 5 to FIG. 11.

FIG. 5 is a flowchart of interaction of a beam alignment training method according to an embodiment of this application. It should be understood that, in the interaction diagram of this application, an example in which the transmit end and the receive end are used as execution bodies of the interaction diagram is used to show a corresponding method. However, the execution bodies of the interaction diagram are not limited in this application. For example, the transmit end in FIG. 5 may alternatively be a chip, a chip system, or a processor that supports the transmit end in implementing a corresponding method, or may be a logical module or software that can implement all or some functions of the transmit end. The receive end in FIG. 5 may alternatively be a chip, a chip system, or a processor that supports the receive end in implementing a corresponding method, or may be a logical module or software that can implement all or some functions of the receive end.

S501: The transmit end sends M pieces of first beam measurement data to the receive end, where the M pieces of first beam measurement data correspond to M measurement beams. An $m^{th}$ measurement beam corresponds to an $m^{th}$ piece of first beam measurement data.

It should be understood that the M measurement beams are a subset of N measurement beams, and N=M, or $1 \leq M < N$. The N measurement beams are all measurement beams corresponding to one digital domain transmit channel of the transmit end.

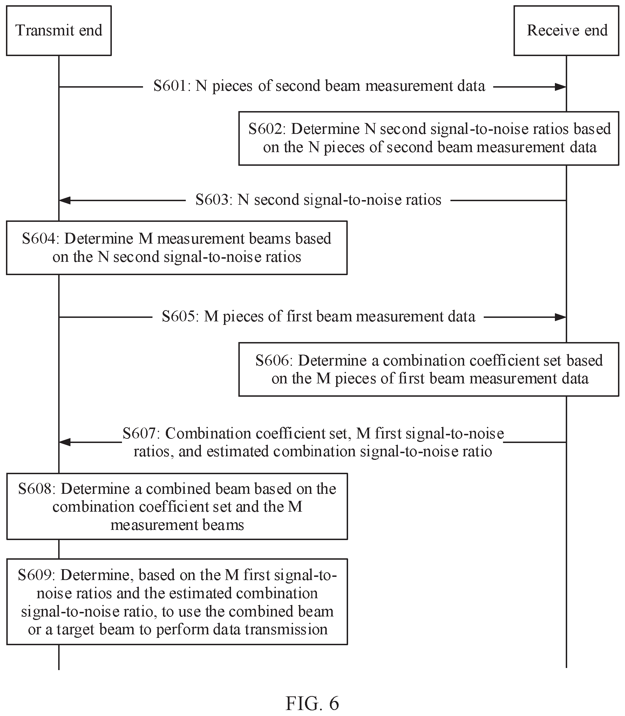

Different measurement beams correspond to fixed different directions. It should be understood that, when the M measurement beams are a proper subset of the N measurement beams and $1 \leq M < N$, a specific implementation of the method is described in detail with reference to FIG. 6.

In a possible implementation, the M pieces of first beam measurement data may be carried in one null data packet (null data packet, NDP), or the M pieces of first beam measurement data are carried in one or M protocol data unit PPDU data packets.

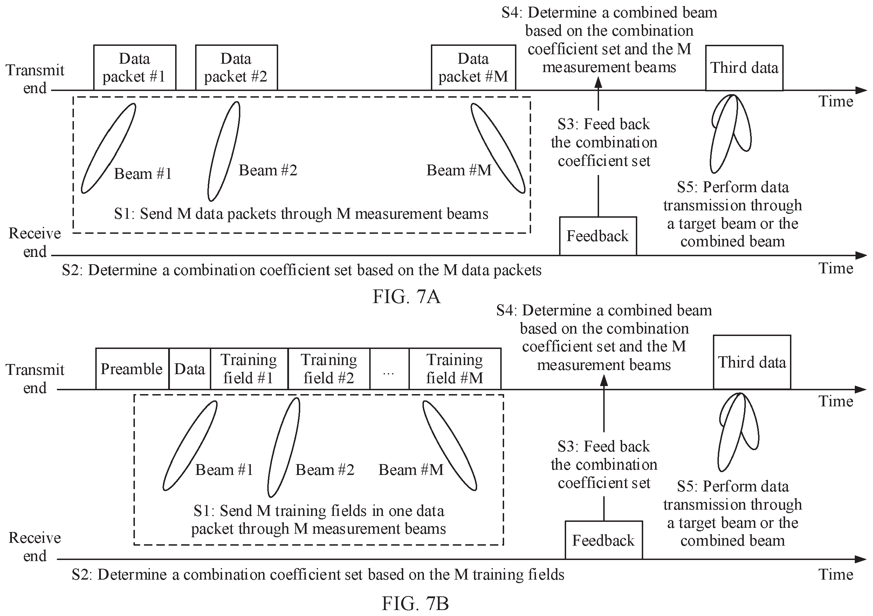

For example, when the M pieces of first beam measurement data are carried in M PPDU data packets, the transmit end sends the M PPDU data packets through the M measurement beams at an equal interval. Specifically, this may also be understood as a packet-by-packet beam alignment training manner. A detailed process is described in detail with reference to FIG. 7A.

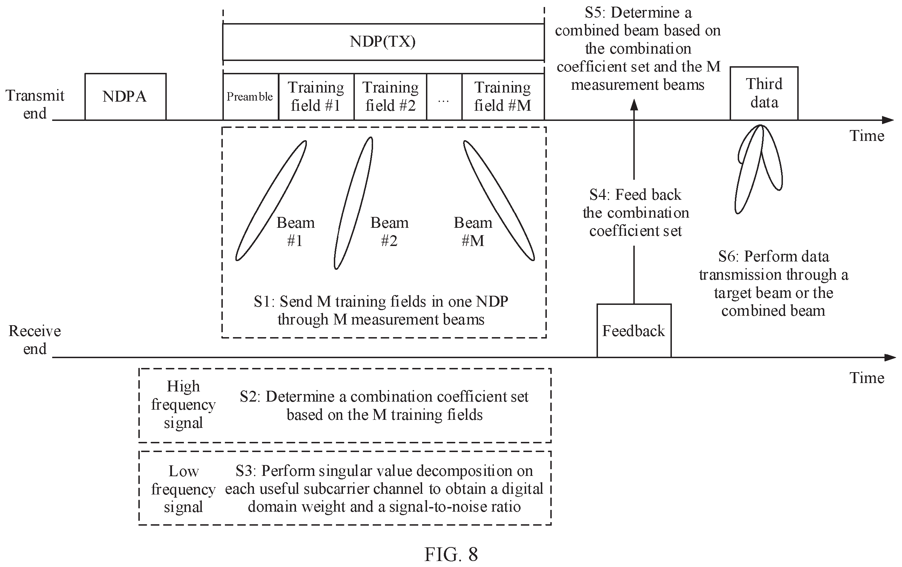

For another example, when the M pieces of first beam measurement data are carried in one null data packet NDP or one PPBU data packet, the first beam measurement data may be a training field, and the transmit end sends the M training fields through the M measurement beams in one data packet. Specifically, this may also be understood as an in-packet beam alignment training manner, or in combination with a low frequency NDP measurement manner. A detailed process is described in detail with reference to FIG. 7B and FIG. 8.

S502: The receive end determines a combination coefficient set based on the M pieces of first beam measurement data, where the combination coefficient set includes M beam weighting coefficients, an $m^{th}$ beam weighting coefficient corresponds to the $m^{th}$ piece of first beam measurement data, the $m^{th}$ beam weighting coefficient represents a weight value of the $m^{th}$ measurement beam in the M measurement beams, $1 \leq m \leq M$, and m and M are positive integers.

In a possible implementation, M first channel estimation results are determined based on the M pieces of first beam measurement data; a full-band channel covariance matrix is determined based on the M first channel estimation results, where the full-band channel covariance matrix is obtained by performing summation averaging based on K $M \times M$-dimensional channel covariance matrices corresponding to K subcarriers, and K is a positive integer; and singular value division is performed on the full-band channel covariance matrix to obtain the combination coefficient set.

It should be understood that a specific representation form of the first channel estimation result may be an estimation matrix for the first beam measurement data. The full-band channel covariance matrix represents channel characteristic space information. Each useful subcarrier may correspond to one channel covariance matrix obtained based on the first channel estimation result. The full-band channel covariance matrix may also be referred to as a full-bandwidth channel covariance matrix, and is obtained by performing summation averaging based on the K $M \times M$-dimensional channel covariance matrices corresponding to the K subcarriers.

In a possible implementation, when the receive end has a multi-stream transmission capability, the receive end jointly calculates, based on the M pieces of first beam measurement data and according to a criterion of maximizing a total system capacity, combination coefficient sets of a plurality of digital domain transmit channels.

Specifically, the combination coefficient set of each digital channel is sequentially calculated according to the M pieces of first beam measurement data in a manner similar to serial interference cancellation, to coordinate inter-stream interference and maximize a system capacity.

In a possible implementation, when the receive end has a multi-beam measurement capability, the receive end calculates, in a joint iteration manner of the receive end and the transmit end, a combination coefficient set corresponding to a plurality of beams.

S503: The receive end sends the combination coefficient set to the transmit end.

S504: The transmit end determines a combined beam based on the combination coefficient set and the M measurement beams.

Specifically, weighted combination is performed on the M measurement beams by using the M beam weighting coefficients in the combination coefficient set, and the combined beam is obtained through processing based on a hardware limitation constraint.

In the foregoing technical solution, the transmit end obtains beam weighting coefficients corresponding to a plurality of measurement beams, and combines the beam weighting coefficients and the original measurement beams into a new combined beam. The combined beam can better match an actual air interface channel direction, and a channel gain can be better used, so that precise beam alignment can be implemented, and coverage performance can be improved. For example, in a scenario in which the receive end is not completely aligned with a main lobe of the measurement beam, a channel gain can be better used through the combined beam obtained through the combination coefficient set, to implement precise beam alignment. For another example, in a scenario in which an NLOS exists in a millimeter-wave channel, when a single beam cannot cover all channel angles, channel gains of all beams are comprehensively considered for the combined beam obtained through the combination coefficient set, to implement precise beam alignment and improve coverage performance.

FIG. 6 is a diagram of interaction of another beam alignment training method according to an embodiment of this application. It should be understood that, for related descriptions of the execution body shown in FIG. 6, reference may be made to FIG. 5. Details are not described herein again.

S601: A transmit end sends N pieces of second beam measurement data to a receive end, where the N pieces of second beam measurement data correspond to N measurement beams.

It should be understood that the N pieces of second beam measurement data may be specifically carried in the PPDU data packet in the per-beam alignment training method shown in FIG. 3A, or the N pieces of second beam measurement data may be N training fields in one PPDU data packet in the in-packet alignment training method shown in FIG. 3B. Different measurement beams correspond to fixed different directions.

Specifically, the transmit end traverses and uses the N measurement beams to send the N pieces of second beam measurement data to the receive end.

S602: The receive end determines N second signal-to-noise ratios based on the N pieces of second beam measurement data.

S603: The receive end sends the N second signal-to-noise ratios to the transmit end.

S604: The transmit end determines M measurement beams based on the N second signal-to-noise ratios.

Specifically, the transmit end determines, as the M measurement beams, measurement beams corresponding to second signal-to-noise ratios that are in the N second signal-to-noise ratios and that are greater than a first threshold.

It should be understood that S601 to S604 are a process of determining the M measurement beams when the M measurement beams are a subset of the N measurement beams and $1 \leq M < N$. The M measurement beams may be understood as better measurement beams in the N measurement beams.

S605: The transmit end sends M pieces of first beam measurement data to the receive end, where the M pieces of first beam measurement data correspond to the M measurement beams, and an $m^{th}$ measurement beam corresponds to an $m^{th}$ piece of first beam measurement data.

It should be understood that, for a detailed process of S605, reference may be made to S501. Details are not described herein again.

S606: The receive end determines a combination coefficient set based on the M pieces of first beam measurement data, where the combination coefficient set includes M beam weighting coefficients, an $m^{th}$ beam weighting coefficient corresponds to the $m^{th}$ piece of first beam measurement data, the $m^{th}$ beam weighting coefficient represents a weight coefficient of the $m^{th}$ measurement beam in the M measurement beams, $1 \leq m \leq M$, and m and M are positive integers.

In a possible implementation, M first channel estimation results are determined based on the M pieces of first beam measurement data; and a full-band channel covariance matrix is determined based on the M first channel estimation results, and singular value division is performed on the full-band channel covariance matrix to obtain the combination coefficient set.

Specifically, in a scenario in which the transmit end has only a single digital domain transmit channel, when the transmit end sends the M pieces of first beam measurement data through the digital domain transmit channel, an $m^{th}$ first channel estimation result corresponding to the $m^{th}$ measurement beam is denoted as $H_m(k)$, where $1 \leq m \leq M$, m is a positive integer, k represents numbers of K useful subcarriers in a bandwidth, $1 \leq k \leq K$, and k and K are positive integers. The M first channel estimation results are denoted as $H(k) = [H_1(k) \ldots H_M(k)]$.

Specifically, in a scenario in which the transmit end has only a single digital domain transmit channel, the full-band channel covariance matrix may be obtained by using formula (1), and a dimension of the full-band channel covariance matrix is $M \times M$.

$$R = \frac{1}{K} \sum_{k=1}^{K} H^T(k)H(k) \qquad (1)$$

Singular value decomposition is performed on the full-band channel covariance matrix, and $R = USV^T$. dimension of the matrix V is $M \times 1$.

In a possible implementation, M first signal-to-noise ratios are determined based on the M first channel estimation results.

In a possible implementation, an estimation result of combination is obtained based on the combination coefficient set and the M first channel estimation results; and an estimated combination signal-to-noise ratio is determined based on the estimation result of combination.

Specifically, the M first channel estimation results are multiplied by the combination coefficient set to obtain the combination estimation result, where the combination estimation result may be specifically denoted as $\tilde{H}(k) = H(k)v$.

In a scenario in which the transmit end has a plurality of digital domain transmit channels, each digital domain transmit channel may send a plurality of pieces of first beam measurement data. Correspondingly, each digital domain transmit channel corresponds to a plurality of first channel estimation results.

In the scenario in which the transmit end has the plurality of digital domain transmit channels, the receive end may calculate a full-band channel covariance matrix for each digital domain transmit channel, where the full-band channel covariance matrix is denoted as $R_i$. Correspondingly, singular value decomposition $R_i = U_i S_i V_i^T$ is performed on each full-band channel covariance matrix. A first column vector $v_i$ of each matrix $V_i$ is a combination coefficient set corresponding to each digital domain transmit channel.

S607: The receive end sends the combination coefficient set, the M first signal-to-noise ratios, and the estimated combination signal-to-noise ratio to the transmit end.

Specifically, the receive end may compress the combination coefficient set, the M first signal-to-noise ratios, and the estimated combination signal-to-noise ratio, and feed back a compression result to the transmit end.

S608: The transmit end obtains a combined beam based on the combination coefficient set and the M measurement beams.

Specifically, weighted combination is performed on the M measurement beams by using the M beam weighting coefficients in the combination coefficient set, and the combined beam is obtained through processing based on a hardware limitation constraint.

S609: The transmit end determines, based on the M first signal-to-noise ratios and the estimated combination signal-to-noise ratio, to use the combined beam or a target beam to perform data transmission, where a first signal-to-noise ratio corresponding to the target beam is the largest in the M first signal-to-noise ratios.

In a possible implementation, if the estimated combination signal-to-noise ratio is greater than the largest first signal-to-noise ratio in the M first signal-to-noise ratios, it is determined that the combined beam is used for data transmission.

In a possible implementation, if the estimated combination signal-to-noise ratio is less than or equal to the largest first signal-to-noise ratio in the M first signal-to-noise ratios, it is determined that the target beam is used for data transmission.

A difference between the beam alignment training method shown in FIG. 6 and the beam alignment training method shown in FIG. 5 lies in that the M measurement beams used in S605 in FIG. 6 to send the M pieces of first beam measurement data are obtained through screening in S601 to S604.

In the foregoing technical solution, the measurement beams obtained through one round of beam alignment training are used for a next round of beam alignment training, so that beam overheads and a calculation amount of the receive end can be reduced, and a signal-to-noise ratio fluctuation of measurement beams in a next round of in-package beam alignment training can be limited, so that the combination coefficient set obtained through calculation is more accurate.

The following describes in detail beam alignment training methods of different types of first beam measurement data with reference to FIG. 7A and FIG. 7B and FIG. 8.

FIG. 7A and FIG. 7B are diagrams of interaction of still another beam alignment training method according to an embodiment of this application. FIG. 7A shows a packet-by-packet beam alignment training method in which M pieces of first beam measurement data are carried in M data packets (for example, M PPDU data packets).

S1: A transmit end continuously sends M data packets to a receive end through M measurement beams, where each data packet is a complete PPDU data packet. A type of the M data packets may be an SSW data packet or may be a short-SSW data packet.

S2: The receive end determines a combination coefficient set based on the M data packets. It should be understood that a specific possible implementation has been described in detail in FIG. 5 and FIG. 6. Details are not described herein again.

S3: The receive end feeds back the combination coefficient set to the transmit end. It should be understood that, for a detailed explanation of the combination coefficient set, reference may be made to S502 and S606.

Optionally, the receive end further feeds back M first signal-to-noise ratios and an estimated combination signal-to-noise ratio to the transmit end. The combination coefficient set, the M first signal-to-noise ratios, and the estimated combination signal-to-noise ratio may be compressed and then fed back to the transmit end.

S4: The transmit end determines a combined beam based on the combination coefficient set and the M measurement beams.

S5: The transmit end performs data transmission through a target beam or the combined beam. It should be understood that, for a specific process of determining whether to use the target beam or the combined beam, reference may be made to S609. Details are not described herein again.

FIG. 7B shows an in-packet beam alignment training method in which M pieces of first beam measurement data are carried in M training fields in one data packet (for example, one PPDU data packet). A difference between FIG. 7B and FIG. 7A lies in that in S1, M measurement beams are used in one data packet to send M training fields, and the M training fields are in the same data packet. Other steps are similar. Details are not described herein again.

In this way, if the M measurement beams are measurement beams with a small signal-to-noise ratio difference that are obtained after a first round of screening in FIG. 6 and on which in-packet beam alignment training is performed, a signal-to-noise ratio fluctuation of measurement beams in a next round of in-package beam alignment training may be limited, so that an obtained combination coefficient set is more accurate, and bandwidth resources and signaling overheads can be reduced.

Currently, high frequency and low frequency WLAN protocols are independent. A next-generation WLAN technology will develop in a high frequency and low frequency convergence direction. Currently, a mainline Wi-Fi protocol (for example, 802.11ac/ax/be) is mainly applied to a sub-7 GHz low frequency scenario, and a millimeter-wave high frequency is considered to be integrated in a next-generation mainline Wi-Fi protocol.

FIG. 8 is a diagram of interaction of yet another beam alignment training method according to an embodiment of this application. The beam alignment method shown in FIG. 8 may be compatible with a low frequency scenario in which a current mainline Wi-Fi protocol is applied, and may also be compatible with a high frequency and low frequency convergence scenario in which a next-generation mainline Wi-Fi protocol is applied.

As shown in FIG. 8, in time domain, a transmit end sends a null data packet announcement (null data packet announcement, NDPA) to a receive end. The NDPA is used to notify the receive end of existence of a subsequent NDP, and indicate the receive end to perform channel measurement and feedback.

S1: The transmit end sends M training fields in one NDP through M measurement beams.

The M training (TRN) fields are added to a data structure of the current NDP. The NDP is a PPDU that does not carry a data domain, and the NDP is used for channel measurement.

For a high frequency signal, channel estimation may be implemented by using S2.

S2: Determine a combination coefficient set based on the M training fields. It should be understood that a specific possible implementation has been described in detail in FIG. 5 and FIG. 6. Details are not described herein again.

For a low frequency signal, channel estimation may be implemented by using S3.

S3: Perform singular value decomposition on each useful subcarrier channel to obtain a digital domain weight and a signal-to-noise ratio.

In this way, for the high frequency signal, in S2, when singular value decomposition is performed on a wideband channel covariance matrix to obtain the combination coefficient set, not only complexity is low, but also a channel measurement compression feedback manner of a current mainline Wi-Fi protocol may still be used, and compatibility is good.

For the high frequency signal, a feedback result may be obtained by using S4.

S4: The receive end feeds back the combination coefficient set to the transmit end. It should be understood that, for a detailed explanation of the combination coefficient set, reference may be made to S502 and S606.

Optionally, the receive end further feeds back M first signal-to-noise ratios and an estimated combination signal-to-noise ratio to the transmit end. The combination coefficient set, the M first signal-to-noise ratios, and the estimated combination signal-to-noise ratio may be compressed and then fed back to the transmit end.

For a low frequency signal, a result may be fed back by using the following steps.

Optionally, the receive end compresses and feeds back the digital domain weight and the signal-to-noise ratio of S3.

For a high frequency signal, subsequent data transmission may be implemented by using S5 and S6. For detailed processes of S5 and S6, refer to S508 and S509 in FIG. 5. Details are not described herein again.

For a low frequency signal, subsequent data transmission may be implemented according to the digital domain weight and the signal-to-noise ratio that are fed back by the transmit end.

The foregoing describes, in detail with reference to FIG. 5 to FIG. 8, the beam alignment training methods provided in the embodiments of this application. It may be understood that, to implement the foregoing functions, the electronic device includes a corresponding hardware structure and/or a corresponding software module for performing each function.

A person skilled in the art may be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for the particular application, but it should not be considered that the implementation goes beyond the scope of this application.

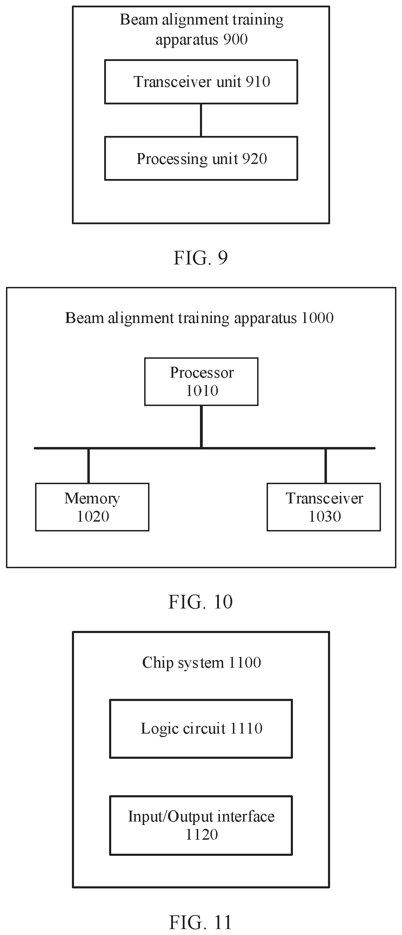

The following describes, in detail with reference to FIG. 9 to FIG. 11, beam alignment training apparatuses provided in embodiments of this application. It should be understood that descriptions of apparatus embodiments correspond to the descriptions of the method embodiments. Therefore, for content that is not described in detail, refer to the foregoing method embodiments. For brevity, some content is not described again.

FIG. 9 is a diagram of a beam alignment training apparatus 900 according to an embodiment of this application. The apparatus 900 may include a processing unit 920, and the processing unit 920 is configured to process data. The apparatus 900 may further include a transceiver unit 910. The transceiver unit 910 may implement a corresponding communication function. The transceiver unit 910 may also be referred to as a communication interface, a communication unit, or an interface unit. It should be understood that unless otherwise specified, or if operations such as sending and receiving in this application do not contradict an actual function or internal logic of the operations in related descriptions, the operations may be more generally understood as operations such as outputting and inputting, instead of operations of sending and receiving directly performed by a radio frequency circuit and an antenna.

Optionally, the apparatus 900 may further include a storage unit. The storage unit may be configured to store instructions and/or data. The processing unit 920 may read the instructions and/or the data in the storage unit, so that the apparatus implements the foregoing method embodiment.

The apparatus 900 may be configured to perform actions performed by the transmit end in the foregoing method embodiments. In this case, the apparatus 900 may be a communication device or a component that can be configured in a communication device. The transceiver unit 910 is configured to perform a receiving/sending-related operation on the communication device side in the foregoing method embodiments, and the processing unit 920 is configured to perform a processing-related operation on the transmit end in the foregoing method embodiments.

In a design, the apparatus 900 is configured to perform actions performed by the transmit end in the beam alignment training in the method embodiments shown in FIG. 5 to FIG. 8. An execution body may be a chip, a chip system, or a processor that supports the transmit end in implementing the corresponding method, or may be a logic module or software that can implement all or some functions of the transmit end.

Specifically, the transceiver unit 910 is configured to receive M pieces of first beam measurement data, where the M pieces of first beam measurement data correspond to M measurement beams.

The processing unit 920 is configured to determine a combination coefficient set based on the M pieces of first beam measurement data, where the combination coefficient set includes M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers.

The transceiver unit 910 is configured to send the combination coefficient set.

For parts that are not described in detail, refer to the foregoing method embodiments.

In a design, the beam alignment training apparatus 900 is configured to perform actions performed by the receive end in the beam alignment training in the method embodiments shown in FIG. 5 to FIG. 8. An execution body may be a chip, a chip system, or a processor that supports the receive end in implementing the corresponding method, or may be a logic module or software that can implement all or some functions of the receive end.

Specifically, the transceiver unit 910 is configured to receive M pieces of first beam measurement data, where the M pieces of first beam measurement data correspond to M measurement beams. The processing unit 920 is configured to determine a combination coefficient set based on the M pieces of first beam measurement data, where the combination coefficient set includes M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers. The transceiver unit 910 is configured to send the combination coefficient set.

For parts that are not described in detail, refer to the foregoing method embodiments.

It should be understood that a specific process in which the units perform the foregoing corresponding steps is described in detail in the foregoing method embodiments, and for brevity, details are not described herein.

The processing unit 920 in the foregoing embodiments may be implemented by at least one processor or processor-related circuit. The transceiver unit 910 may be implemented by using a transceiver or a transceiver-related circuit. The storage unit may be implemented by at least one memory.

FIG. 10 is a diagram of a structure of a beam alignment training apparatus 1000 according to an embodiment of this application.

As shown in FIG. 10, an embodiment of this application further provides a beam alignment training apparatus 1000. The apparatus 1000 includes a processor 1010. The processor 1010 is coupled to a memory 1020. The memory 1020 is configured to store a computer program or instructions and/or data. The processor 1010 is configured to execute the computer program or the instructions and/or the data stored in the memory 1020, so that the methods in the foregoing method embodiments are performed.

Optionally, the apparatus 1000 includes one or more processors 1010.

Optionally, as shown in FIG. 10, the apparatus 1000 may further include the memory 1020.

Optionally, the apparatus 1000 may include one or more memories 1020.

Optionally, the memory 1020 and the processor 1010 may be integrated together or separately disposed.

Optionally, as shown in FIG. 10, the apparatus 1000 may further include a transceiver 1030. The transceiver 1030 is configured to receive and/or send a signal. For example, the processor 1010 is configured to control the transceiver 1030 to receive and/or send the signal.

In a solution, the apparatus 1000 is configured to implement an operation performed by the transmit end or the receive end in the foregoing method embodiments.

For example, the processor 1010 is configured to implement a processing-related operation performed by the transmit end or the receive end in the foregoing method embodiments, and the transceiver 1030 is configured to implement a receiving/sending-related operation performed by the transmit end or the receive end in the foregoing method embodiments.

FIG. 11 is a diagram of a chip system 1100 according to an embodiment of this application. As shown in FIG. 11, the chip system 1100 (or may be referred to as a processing system) includes a logic circuit 1110 and an input/output interface (input/output interface) 1120. The logic circuit is configured to be coupled to the input interface, and transmit a data parameter through the input/output interface, to perform the methods in the foregoing method embodiments. A device in which the chip system 1100 is installed may implement the methods and functions in embodiments of this application. For example, the logic circuit 1110 may be a processing circuit in the chip system 1100, to control the device in which the chip system 1100 is installed, or may be coupled to a storage unit, and invoke instructions in the storage unit, so that the device can implement the methods and functions in embodiments of this application. The input/output interface 1120 may be an input/output circuit in the chip system 1100, to output information processed by the chip system 1100, or input to-be-processed data or signaling information to the chip system 1100 for processing.

In a solution, the chip system 1100 is configured to implement operations performed by the beam alignment training apparatus (for example, the transmit end or the receive end) in the foregoing method embodiments.

For example, the logic circuit 1110 is configured to implement a processing-related operation performed by the transmit end or the receive end in the foregoing method embodiment, and the input/output interface 1120 is configured to implement a receiving/sending-related operation performed by the transmit end or the receive end in the foregoing method embodiment.

An embodiment of this application further provides a communication system. The communication system includes one or more transmit ends and one or more receive ends that implement the beam alignment training method in the foregoing method embodiment.

An embodiment of this application further provides a computer-readable storage medium. The computer-readable storage medium stores a computer instruction used to implement the method performed by the beam alignment training apparatus (for example, the transmit end or the receive end) in the foregoing method embodiments.

For example, when this computer program is executed by a computer, the computer is enabled to implement the method performed by the beam alignment training apparatus (for example, the transmit end or the receive end) in the foregoing method embodiments.

An embodiment of this application further provides a computer program product including instructions. When the instructions are executed by a computer, the computer is enabled to implement the method performed by the beam alignment training apparatus (for example, the transmit end or the receive end) in the foregoing method embodiments.

For explanations and beneficial effects of related content in any one of the apparatuses provided above, refer to the corresponding method embodiment provided above. Details are not described herein again.

It should be understood that, the processor mentioned in this embodiment of this application may be a central processing unit (central processing unit, CPU), and may further be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be further understood that the memory mentioned in embodiments of this application may be a volatile memory and/or a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example, and not limitation, the RAM may include the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, another programmable logic device, a discrete gate or a transistor logic device, or a discrete hardware component, the memory (storage module) may be integrated into the processor.

It should further be noted that the memory described herein is intended to include, but is not limited to, these and any other appropriate type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatuses, and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

**Claims**

1. A beam alignment training method, comprising:

sending, by a transmit end, M pieces of first beam measurement data, wherein the M pieces of first beam measurement data correspond to M measurement beams;

receiving, by the transmit end, a combination coefficient set, wherein the combination coefficient set is determined by a receive end based on the M pieces of first beam measurement data, the combination coefficient set comprises M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and

determining, by the transmit end, a combined beam based on the combination coefficient set and the M measurement beams.

2. The method according to claim 1, wherein before sending, by the transmit end, the M pieces of first beam measurement data, the method further comprises:

sending, by the transmit end, N pieces of second beam measurement data, wherein the N pieces of second beam measurement data correspond to N measurement beams;

receiving, by the transmit end, N second signal-to-noise ratios, wherein an $n^{th}$ second signal-to-noise ratio corresponds to an $n^{th}$ measurement beam; and

determining, as the M measurement beams, measurement beams corresponding to second signal-to-noise ratios that are in the N second signal-to-noise ratios and that are greater than a preset threshold, wherein $1 \leq n \leq N$, n and N are positive integers, and M<N.

3. The method according to claim 1 or 2, wherein the method further comprises:

receiving, by the transmit end, M first signal-to-noise ratios and an estimated combination signal-to-noise ratio, wherein the M first signal-to-noise ratios are obtained by the receive end based on the M pieces of first beam measurement data, and the estimated combination signal-to-noise ratio is determined by the receive end based on the M pieces of first beam measurement data and the combination coefficient set; and

determining, by the transmit end based on the M first signal-to-noise ratios and the estimated combination signal-to-noise ratio, to use the combined beam to perform data transmission, or determining to use a measurement beam corresponding to a largest first signal-to-noise ratio in the M first signal-to-noise ratios to perform data transmission.

4. The method according to any one of claims 1 to 3, wherein the M pieces of first beam measurement data are carried in one null data packet NDP, or the M pieces of first beam measurement data are carried in one or M protocol data unit PPDU data packets.

5. A beam alignment training method, comprising:

receiving, by a receive end, M pieces of first beam measurement data, wherein the M pieces of first beam measurement data correspond to M measurement beams;

determining, by the receive end, a combination coefficient set based on the M pieces of first beam measurement data, wherein the combination coefficient set comprises M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and

sending, by the receive end, the combination coefficient set.

6. The method according to claim 5, wherein determining, by the receive end, the combination coefficient set based on the M pieces of first beam measurement data comprises:

determining, by the receive end, M first channel estimation results based on the M pieces of first beam measurement data;

determining, by the receive end, a full-band channel covariance matrix corresponding to the M first channel estimation results, wherein the full-band channel covariance matrix is obtained by performing summation averaging on K $M \times M$-dimensional channel covariance matrices corresponding to K subcarriers, and K is a positive integer; and

performing, by the receive end, singular value decomposition on the full-band channel covariance matrix to obtain the combination coefficient set.

7. The method according to claim 6, wherein before receiving the M pieces of first beam measurement data, the method further comprises:

receiving, by the receive end, N pieces of second beam measurement data, wherein the N pieces of second beam measurement data correspond to N measurement beams, $1 \leq n \leq N$, and n and N are positive integers; determining, by the receive end, N second signal-to-noise ratios based on the N pieces of second beam measurement data, wherein an $n^{th}$ second signal-to-noise ratio corresponds to an $n^{th}$ measurement beam; and sending, by the receive end, the N second signal-to-noise ratios.

8. The method according to claim 6 or 7, wherein the method further comprises:

determining, by the receive end, an estimation result of combination based on the combination coefficient set and the M first channel estimation results; determining, by the receive end, an estimated combination signal-to-noise ratio based on the estimation result of combination; determining, by the receive end, M first signal-to-noise ratios based on the M first channel estimation results; and sending, by the receive end, the M first signal-to-noise ratios and the estimated combination signal-to-noise ratio.

9. The method according to any one of claims 5 to 8, wherein the M pieces of first beam measurement data are carried in one null data packet NDP, or the M pieces of first beam measurement data are carried in one or M protocol data unit PPDU data packets.

10. A beam alignment training apparatus, comprising a transceiver unit and a processing unit, wherein

the transceiver unit is configured to send M pieces of first beam measurement data, wherein the M pieces of first beam measurement data correspond to M measurement beams; the transceiver unit is configured to receive a combination coefficient set, wherein the combination coefficient set is determined by a receive end based on the M pieces of first beam measurement data, the combination coefficient set comprises M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and the processing unit is configured to determine a combined beam based on the combination coefficient set and the M measurement beams.

11. The apparatus according to claim 10, wherein before the transceiver unit is configured to send the M pieces of first beam measurement data, the transceiver unit is further configured to:

send N pieces of second beam measurement data, wherein the N pieces of second beam measurement data correspond to N measurement beams; and receive N second signal-to-noise ratios, wherein an $n^{th}$ second signal-to-noise ratio corresponds to an $n^{th}$ measurement beam; and the processing unit is further configured to: determine, as the M measurement beams, measurement beams corresponding to second signal-to-noise ratios that are in the N second signal-to-noise ratios and that are greater than a preset threshold, wherein $1 \leq n \leq N$, n and N are positive integers, and M<N.

12. The apparatus according to claim 10 or 11, wherein the transceiver unit is further configured to:

receive M first signal-to-noise ratios and an estimated combination signal-to-noise ratio, wherein the M first signal-to-noise ratios are obtained by the receive end based on the M pieces of first beam measurement data, and the estimated combination signal-to-noise ratio is determined by the receive end based on the M pieces of first beam measurement data and the combination coefficient set; and the processing unit is further configured to: determine, based on the M first signal-to-noise ratios and the estimated combination signal-to-noise ratio, to use the combined beam to perform data transmission, or determine to use a measurement beam corresponding to a largest first signal-to-noise ratio in the M first signal-to-noise ratios to perform data transmission.

13. The apparatus according to any one of claims 10 to 12, wherein the M pieces of first beam measurement data are carried in one null data packet NDP, or the M pieces of first beam measurement data are carried in one or M protocol data unit PPDU data packets.

14. A beam alignment training apparatus, comprising a transceiver unit and a processing unit, wherein

the transceiver unit is configured to receive M pieces of first beam measurement data, wherein the M pieces of first beam measurement data correspond to M measurement beams;

the processing unit is configured to determine a combination coefficient set based on the M pieces of first beam measurement data, wherein the combination coefficient set comprises M beam weighting coefficients, an $m^{th}$ beam weighting coefficient corresponds to an $m^{th}$ piece of first beam measurement data, the $m^{th}$ beam weighting coefficient represents a weight value of an $m^{th}$ measurement beam in the M measurement beams, $1 \leq m \leq M$, and m and M are positive integers; and

the transceiver unit is configured to send the combination coefficient set.

15. The apparatus according to claim 14, wherein the processing unit is specifically configured to:

determine M first channel estimation results based on the M pieces of first beam measurement data;

determine a full-band channel covariance matrix corresponding to the M first channel estimation results, wherein the full-band channel covariance matrix is obtained by performing summation averaging on K $M \times M$-dimensional channel covariance matrices corresponding to K subcarriers, and K is a positive integer; and

perform singular value decomposition on the full-band channel covariance matrix to obtain the combination coefficient set.

16. The apparatus according to claim 15, wherein before the transceiver unit is configured to receive the M pieces of first beam measurement data, the transceiver unit is further configured to:

receive N pieces of second beam measurement data, wherein the N pieces of second beam measurement data correspond to N measurement beams, $1 \leq n \leq N$, and n and N are positive integers;

the processing unit is further configured to determine N second signal-to-noise ratios based on the N pieces of second beam measurement data, wherein an $n^{th}$ second signal-to-noise ratio corresponds to an $n^{th}$ measurement beam; and

the transceiver unit is further configured to send the N second signal-to-noise ratios.

17. The apparatus according to claim 15 or 16, wherein the processing unit is further configured to:

determine an estimation result of combination based on the combination coefficient set and the M first channel estimation results;

determine an estimated combination signal-to-noise ratio based on the estimation result of combination; and

determine M first signal-to-noise ratios based on the M first channel estimation results; and

the transceiver unit is further configured to send the M first signal-to-noise ratios and the estimated combination signal-to-noise ratio.

18. The apparatus according to any one of claims 14 to 17, wherein the M pieces of first beam measurement data are carried in one null data packet NDP, or the M pieces of first beam measurement data are carried in one or M protocol data unit PPDU data packets.

19. A beam alignment training apparatus, comprising a processor, wherein the processor is coupled to a memory, the memory is configured to store a computer program or instructions, and the processor is configured to execute the computer program or the instructions in the memory, to enable the apparatus to perform the method according to any one of claims 1 to 9.

20. A computer-readable storage medium, wherein the computer-readable storage medium stores a computer program or instructions, and when the computer program or the instructions are run on a computer, the computer is enabled to perform the method according to any one of claims 1 to 9.

21. A chip, wherein the chip is coupled to a memory, and is configured to: read and execute program instructions stored in the memory, to implement the method according to any one of claims 1 to 9.

Receive end #1

Receive end #2

Transmit end

Receive end #3

FIG. 1

FIG. 2

FIG. 3A

FIG. 3B

EP 4 776 522 A1

Reflection
path

Direct path

Transmit end

Receive end

FIG. 4

Transmit end

Receive end

S501: M pieces of first beam measurement data →

S502: Determine a combination
coefficient set based on the M pieces
of first beam measurement data

← S503: Combination coefficient set

S504: Determine a combined beam
based on the combination coefficient
set and M measurement beams

FIG. 5

| Transmit end | | Receive end |
|---|---|---|

S601: N pieces of second beam measurement data →

S602: Determine N second signal-to-noise ratios based on the N pieces of second beam measurement data

← S603: N second signal-to-noise ratios

S604: Determine M measurement beams based on the N second signal-to-noise ratios

S605: M pieces of first beam measurement data →

S606: Determine a combination coefficient set based on the M pieces of first beam measurement data

← S607: Combination coefficient set, M first signal-to-noise ratios, and estimated combination signal-to-noise ratio

S608: Determine a combined beam based on the combination coefficient set and the M measurement beams

S609: Determine, based on the M first signal-to-noise ratios and the estimated combination signal-to-noise ratio, to use the combined beam or a target beam to perform data transmission

FIG. 6

EP 4 776 522 A1

S4: Determine a combined beam based on the combination coefficient set and the M measurement beams

| Transmit end | Data packet #1 | Data packet #2 | Data packet #M | Third data |
| --- | --- | --- | --- | --- |

Beam #1  Beam #2  Beam #M

S1: Send M data packets through M measurement beams

S3: Feed back the combination coefficient set

S5: Perform data transmission through a target beam or the combined beam

Receive end

Feedback

S2: Determine a combination coefficient set based on the M data packets

Time

**FIG. 7A**

S4: Determine a combined beam based on the combination coefficient set and the M measurement beams

| Transmit end | Preamble | Data | Training field #1 | Training field #2 | ... | Training field #M | Third data |
| --- | --- | --- | --- | --- | --- | --- | --- |

Beam #1  Beam #2  Beam #M

S1: Send M training fields in one data packet through M measurement beams

S3: Feed back the combination coefficient set

S5: Perform data transmission through a target beam or the combined beam

Receive end

Feedback

S2: Determine a combination coefficient set based on the M training fields

Time

**FIG. 7B**

EP 4 776 522 A1

Transmit
end

NDPA

NDP(TX)

Preamble | Training field #1 | Training field #2 | ... | Training field #M

S5: Determine a combined beam based on the combination coefficient set and the M measurement beams

Third data

Time

Beam #1

Beam #2

Beam #M

S1: Send M training fields in one NDP through M measurement beams

S4: Feed back the combination coefficient set

S6: Perform data transmission through a target beam or the combined beam

Receive
end

Feedback

Time

High frequency signal

S2: Determine a combination coefficient set based on the M training fields

Low frequency signal

S3: Perform singular value decomposition on each useful subcarrier channel to obtain a digital domain weight and a signal-to-noise ratio

FIG. 8

Beam alignment training
apparatus 900

Transceiver unit 910

Processing unit 920

FIG. 9

Beam alignment training apparatus 1000

Processor
1010

Memory
1020

Transceiver
1030

FIG. 10

Chip system 1100

Logic circuit 1110

Input/Output interface
1120

FIG. 11

## INTERNATIONAL SEARCH REPORT

| | International application No. |
|---|---|
| | **PCT/CN2024/119384** |

**A.    CLASSIFICATION OF SUBJECT MATTER**

H04B7/0413(2017.01)i

According to International Patent Classification (IPC) or to both national classification and IPC

**B.    FIELDS SEARCHED**

Minimum documentation searched (classification system followed by classification symbols)

IPC:H04B; H04W

Documentation searched other than minimum documentation to the extent that such documents are included in the fields searched

Electronic data base consulted during the international search (name of data base and, where practicable, search terms used)

CNTXT, ENTXT, ENTXTC, VEN, WPABS, WPABSC, CNKI, 3GPP: 波束, 波束对准, 测量, 测量波束, 合并, 加权, 加权系数, 码本波束, 模拟波束, 系数, Beam, beam alignment, combin+, weighting coefficient?, coefficient?, merg+, combination coefficient sets, weighting coefficient

**C.    DOCUMENTS CONSIDERED TO BE RELEVANT**

| Category* | Citation of document, with indication, where appropriate, of the relevant passages | Relevant to claim No. |
|---|---|---|
| X | CN 108832981 A (BEIJING UNIVERSITY OF POSTS AND TELECOMMUNICATIONS) 16 November 2018 (2018-11-16) description, paragraphs [0045]-[0121], and figures 1-8 | 1-21 |
| A | CN 110649947 A (HUAWEI TECHNOLOGIES CO., LTD.) 03 January 2020 (2020-01-03) entire document | 1-21 |
| A | US 2022149908 A1 (HUAWEI TECHNOLOGIES CO., LTD.) 12 May 2022 (2022-05-12) entire document | 1-21 |
| A | CEWIT. "R1-2303305, Discussion on evaluation methodology and inital results for beam enhancement on sidelink FR2 operation" *3GPP TSG RAN WG1 #112-bis-e*, 08 April 2023 (2023-04-08), entire document | 1-21 |

☐ Further documents are listed in the continuation of Box C.    ☑ See patent family annex.

| | | |
|---|---|---|
| * | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X"    document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **02 December 2024** | **04 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/119384**

| Patent document cited in search report | | | Publication date (day/month/year) | Patent family member(s) | | | Publication date (day/month/year) |
|---|---|---|---|---|---|---|---|
| CN | 108832981 | A | 16 November 2018 | None | | | |
| CN | 110649947 | A | 03 January 2020 | EP | 3806345 | A1 | 14 April 2021 |
| | | | | EP | 3806345 | A4 | 04 August 2021 |
| | | | | WO | 2020001454 | A1 | 02 January 2020 |
| | | | | CN | 110649947 | B | 08 September 2023 |
| US | 2022149908 | A1 | 12 May 2022 | WO | 2020125655 | A1 | 25 June 2020 |
| | | | | US | 11424803 | B2 | 23 August 2022 |
| | | | | EP | 3890202 | A1 | 06 October 2021 |
| | | | | EP | 3890202 | A4 | 19 January 2022 |
| | | | | CN | 111327352 | A | 25 June 2020 |
| | | | | CN | 111327352 | B | 16 July 2021 |
| | | | | CN | 1113708810 | A | 26 November 2021 |
| | | | | CN | 1113708810 | B | 01 November 2022 |
| | | | | US | 11424803 | B2 | 23 August 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311289449X